# EUROPEAN PATENT SPECIFICATION

(11) **EP 3 582 636 B1**
(45) Date of publication and mention of the grant of the patent: **03.03.2021**
(21) Application number: 18706191.6
(22) Date of filing: 24.01.2018
(51) Int. Cl.: A23L 29/212, A23L 27/10, A23L 33/115, A23L 23/10, A23L 27/22, A23P 10/20

(54) **PROCESS FOR THE PREPARATION OF A SHAPED SAVOURY CONCENTRATE**
VERFAHREN ZUR HERSTELLUNG EINES GEFORMTEN WOHLSCHMECKENDEN KONZENTRATS
PROCÉDÉ DE PRÉPARATION D'UN CONCENTRÉ SALÉ FAÇONNÉ

(30) Priority: 17.02.2017 EP 17156601
(43) Date of publication of application: 25.12.2019
(73) Proprietor: Unilever IP Holdings B.V., 3013 AL Rotterdam (NL)
(72) Inventor: BLIJDENSTEIN, Theodorus, Berend ,Jan, 3133 AT Vlaardingen (NL); VAN DALEN, Gerard, 3133 AT Vlaardingen (NL); JANSEN, Jeoffrey, Nikolai, 3133 AT Vlaardingen (NL); LEERINK, Arinus, Frederikus, 3133 AT Vlaardingen (NL); VAN MALSSEN, Kees, Frederik, 3133 AT Vlaardingen (NL)
(74) Representative: Tjon, Hon Kong Guno
(86) International application number: PCT/EP2018/051717
(87) International publication number: WO 2018/149604

(56) References cited:
- EP-A1- 1 806 976
- WO-A1-2006/111220
- WO-A1-2009/074442
- WO-A1-2011/069885
- WO-A1-2012/080063
- WO-A1-2013/064449
- WO-A1-2017/021069
- OA-A- 12 967
- US-A1- 2002 187 224

## Description

### Field of the invention

The invention relates to a process of preparing a savoury concentrate in the form of a shaped article, said process comprising the following sequence of processing steps:
a) preparing a premix having a moisture content of 0.5-12 wt.% by:
   - providing a powder mix of one or more particulate ingredients, including 5-100% by weight of the powder mix of particulate native starch;
   - agglomerating the powder mix to produce starch-containing granules by heating the powder mix to a temperature that is 3 to 20 °C below the gelatinization temperature of the particulate native starch, followed by wet agglomeration of the hot powder mix with an aqueous liquid; and
   - optionally combining the granules with one or more other edible ingredients;
   said premix containing, calculated by weight of dry matter:
   - 5-30 wt.% of starch-containing granules having a diameter of 0.15-2.5 mm and comprising 20-100 wt.% starch;
   - 10-76 wt.% of salt selected from sodium chloride, potassium chloride, monosodium glutamate and combinations thereof;
   - 0-60 wt.% of one or more particulate edible ingredients selected from sugar, spices, herbs and vegetables;
a) mixing the premix with molten fat to produce slurry; and
b) shaping the slurry into a shaped article.

The invention further relates to a shaped savoury concentrate obtained by said process. The shaped savoury concentrate can suitably be applied as a seasoning on finished meals, as a condiment during cooking, or it can be used in the preparation of bouillons, soups, sauces and gravies. Bouillon cubes are a well-known example of a shaped savoury concentrate.

### Background of the invention

Shaped savoury concentrates, such as bouillon or seasoning cubes, are widely used to prepare bouillon, broths, soups, sauces and gravies. In the preparation of these foodstuffs, bouillon cubes are usually added to a hot aqueous liquid to disperse the bouillon cubes. Bouillon cubes can also be used as a seasoning.

WO 2012/080063 discloses easy to crumble stock or seasoning cubes comprising 2-15 wt.% water, a saturated solution of NaCl, a saturated solution of monosodium glutamate

(MSG) and at least 25 wt.% monosaccharide sugars based on weight of total water content. The formulations described in the examples are prepared by:
- melting a solid palm fat;
- mixing fructose and glucose in the cold water and then heating up at 60°C;
- mixing the remaining dry ingredients (salt, sucrose, fine MSG, starch) to the fructose glucose solution and mixing rigorously;
- adding this mixture to molten palm fat;
- pressing the mixture in a metal mold.

EP-A 2 091 359 relates to a solid food concentrate, e.g. a bouillon or seasoning concentrate, comprising one or more of salt, monosodium glutamate, sugar, starch and a mixture of fat and polyol. The patent examples describe a chicken bouillon cube comprising 49.4 wt.% salt, 11.9 wt.% monosodium glutamate, 12.0 wt.% vegetable hydrogenated fat, 5.4 wt.% glycerol, 13.7 wt.% potato starch (dried), and other edible components. The cube according to the example could be easily crumbled and did not show fat staining on the packaging.

US 4,126,710 describes a process for preparing sauce mixes. The process comprises the steps of forming a mixture by adding a particulate moisture-containing farinaceous material to molten fat, maintaining the mixture at elevated temperature to evaporate said moisture and to obtain a thick particulate mixture having a dough-like consistency wherein the farinaceous particles are coated with the liquid fat, cooling the heated mixture to form a plastic mass wherein farinaceous particles and crystallized fat glycerides are interspersed.

WO 2009/074442 describes a process to prepare seasoning cubes, the cubes comprising
- at least 35 wt.% of crystalline ingredients comprising at least one of salt, monosodium glutamate and sugar;
- at least 5 wt.% of noncrystalline ingredients comprising at least starch,
- at least 5 wt.% of at least one of the group of fat, liquid polyol and water,
the process comprising the steps of:
(a) mixing at least part of the non-crystalline ingredients with the at least one of the group of fat, liquid polyol and water,
(b) granulating the product resulting from step (a), wherein at least 80 wt.% of the resulting mass is in a granular form,
(c) mixing at least part of the product resulting from step (b) with at least part of the crystalline ingredients,
(d) shaping the mixture resulting from step (c) to cubes or tablets.

WO 2013/064449 describes a process for preparation of the shaped food concentrate, comprising the steps of:
a. mixing 35-85 parts weight crystalline ingredients composed of at least one of salt, monosodium glutamate and sugar with 0-12 parts solid fat to prepare a premix;
b. alternatively
   i. adding 0.2-10 parts by weight gelatinized starch to 0.2-20 parts by weight water, or
   ii. adding 0.2-10 parts of ungelatinized starch to 0.5-20 parts water and heating at a temperature above 70°C to prepare a starch gel and cool the gel;
c. optionally subjecting the starch gel to a further step of mixing to optimize the texture for further processing;
d. mixing the premix with the starch gel to obtain a mixture; and
e. shaping the mixture to obtain a shaped food concentrate.

WO 2006/111220 describes a process for preparing a packed solid concentrate comprising:
- 2-70% of salt and/or 1-70% starch or flour, and one or more of:
- 3-60% fat
- 10-95% of a taste and/or flavour imparting substance including herbs, spices, vegetable powders or particulates, flavourants, taste-enhancers, sugar,
the process comprising the steps of:
(a) mixing the ingredients,
(b) shaping by compressing a portion of the mixed ingredients obtained under (a) to a solid concentrate article,
(c) packaging the solid concentrate article obtained under (b) in a container.

OA 12 967-A describes a process for the production of a hard bouillon tablet or cube, which comprises the steps of
- preparing a dry premix of powdered constituents comprising, in total tablet or cube weight %, from 10 to 8 0 % of crystals and up to 30 % of a filler,
- adding, in total tablet or cube weight %, from 1 to 10% of a liquid oil and optionally solid fat to the dry premix while further mixing,
- adding, in total tablet or cube weight %, from 0.2 to 1.5 % of water while further mixing,
- adding from 1 to 20 % by weight, of a sticking agent and optionally spices, flavours, and/or plant extracts,
- and tableting the final mixture thus obtained.

Shaped savoury concentrates that can be crumbled between the fingers during the preparation or finishing of dishes are preferred by consumers. Shaped seasoning or bouillon cubes are often hard and difficult to crumble. Moisture and fat contents can adversely affect the texture of these products, since increased moisture renders the shaped articles sticky or doughy, reducing crumbability, and higher fat content leaves consumers with greasy fingers after crumbling.

It is an object of the present invention to provide a robust simple process for the preparation of a shaped a savoury concentrate that is easy to crumble and that readily disperses in water.

### Summary of the invention

A first aspect of the invention relates to a process of preparing a savoury concentrate in the form of a shaped article, said process comprising the following sequence of processing steps:
a) preparing a premix having a moisture content of 0.5-12 wt.% by:
   - providing a powder mix of one or more particulate ingredients, including 5-100% by weight of the powder mix of particulate native starch;
   - agglomerating the powder mix to produce starch-containing granules by heating the powder mix to a temperature that is 3 to 20 °C below the gelatinization temperature of the particulate native starch, followed by wet agglomeration of the hot powder mix with an aqueous liquid; and
   - optionally combining the granules with one or more other edible ingredients;
   said premix containing, calculated by weight of dry matter:
   - 5-30 wt.% of starch-containing granules having a diameter of 0.15-2.5 mm and comprising 20-100 wt.% starch;
   - 10-76 wt.% of salt selected from sodium chloride, potassium chloride, monosodium glutamate and combinations thereof;
   - 0-60 wt.% of one or more particulate edible ingredients selected from sugars, spices, herbs and vegetables;
b) mixing the premix with molten fat to produce slurry; and
c) shaping the slurry into a shaped article.

The inventors have surprisingly found that incorporation of starch in the form of granules having a diameter of 0.15-2.5 mm has a favourable impact on the crumbability and dispersibility of the shaped savoury concentrate. The present process does not require special equipment nor does it rely on the application of special processing agents.

A second aspect of the present invention relates to a shaped savoury concentrate obtained by the process as described herein before.

### Detailed description of the invention

A first aspect of the invention relates to a process of preparing a savoury concentrate in the form of a shaped article, said process comprising the following sequence of processing steps:
a) preparing a premix having a moisture content of 0.5-12 wt.% by:
   - providing a powder mix of one or more particulate ingredients, including 5-100% by weight of the powder mix of particulate native starch;
   - agglomerating the powder mix to produce starch-containing granules by heating the powder mix to a temperature that is 3 to 20 °C below the gelatinization temperature of the particulate native starch, followed by wet agglomeration of the hot powder mix with an aqueous liquid; and
   - optionally combining the granules with one or more other edible ingredients;
   said premix containing, calculated by weight of dry matter:
   - 5-30 wt.% of starch-containing granules having a diameter in the range of 0.15-2.5 mm and comprising 20-100 wt.% starch;
   - 10-76 wt.% of salt selected from sodium chloride, potassium chloride, monosodium glutamate and combinations thereof;
   - 0-60 wt.% of one or more particulate edible ingredients selected from sugars, spices, herbs and vegetables;
a) mixing the premix with molten fat to produce slurry; and
b) shaping the slurry into a shaped article.

The term "starch" as used herein refers to a polymeric carbohydrate consisting of glucose units joined by glycosidic bonds. Starch is produced by most green plants as an energy store. Natural starch consists of two types of molecules: the linear and helical amylose and the branched amylopectin. The term "starch" as used herein encompasses native starch as well as modified starches.

The term "native starch" as used herein refers to starch that has not undergone gelatinization nor has been modified chemically or enzymatically.

The term "fat" as used herein refers to both fat and liquid oil comprising glycerides selected from triglycerides, diglycerides, monoglycerides, phosphoglycerides and combinations thereof.

The term "shaped article" as used herein refers to articles that sufficiently stable against attrition and do not suffer significant damages during packaging, transport and storage, whilst being easily crumbled by hand upon usage. Typical examples of shaped articles according to the invention include "tablets" or "cubes".

The term "agglomerating" is used herein to refer to the act or process in which primary powder particles are made to adhere to form larger, multi-particle entities called granules. In the present process agglomeration of the powder mix can be achieved, for instance, by wet granulation or dry granulation.

The diameter of the starch-containing granules and of other particulate ingredients may suitably be determined using a set of sieves with different mesh sizes. Laser diffraction (using a Malvern Mastersizer 2000, equipped with the Scirocco venture dispenser) may be used to determine the diameter of particles that are too small to be analysed by the aforementioned sieve analysis.

The premix that is employed in the present process preferably has a moisture content of not more than 10 wt.%, more preferably a moisture content of 1-9 wt.% and most preferably a moisture content of 1.5-8 wt.%.

The premix preferably contains 7.5-27 wt.% of starch-containing granules, calculated by weight of dry matter. More preferably the premix contains 10-24 wt.%, most preferably contains 12.5-21 wt.% of starch-containing granules, calculated by weight of dry matter.

The savoury concentrate preferably contains at least 5 wt.%, more preferably 6-27 wt.% of starch-containing granules having a diameter of 0.2-2.3 mm. more preferably of 0.25-2 mm and most preferably of 0.3-1.8 mm.

The starch-containing granules preferably comprise at least 30 wt.% starch. More preferably, the starch-containing granules comprise at least 40 wt.%, most preferably 50-85 wt.% of starch.

According to a particularly preferred embodiment, the starch-containing granules comprise at least 20 wt.%, more preferably at least 30 wt.%, even more preferably at least 40 wt.% and most preferably at least 50 wt.% of native starch.

The native starch contained in the granules typically has a gelatinization temperature within the range of 50 to 100 °C. Preferably, the native starch contained in the granules has a gelatinization temperature within the range of 55 to 95 °C, more preferably within the range of 60 to 80 °C.

The premix preferably contains 20-74 wt.% of salt selected from sodium chloride, potassium chloride, monosodium glutamate and combinations thereof, calculated by weight of dry matter. More preferably the premix contains 30-72 wt.%, most preferably contains 40-70 wt.% of salt selected from sodium chloride, potassium chloride, monosodium glutamate and combinations thereof, calculated by weight of dry matter.

The premix preferably contains 2-50 wt.% of the one or more particulate edible ingredients selected from sugars, spices, herbs and vegetables, calculated by weight of dry matter. More preferably the premix contains 4-40 wt.%, most preferably contains 6-30 wt.% of the one or more particulate edible ingredients, calculated by weight of dry matter.

The sugars are preferably selected from monosaccharides, disaccharides and combinations thereof. More preferably, the aforementioned sugars are selected from sucrose, glucose, fructose, lactose and combinations thereof.

The premix preferably contains at least 3 wt.%, more preferably at least 5 wt.% and most preferably at least 7 wt.% of spices, herbs and combinations thereof. Examples of spices and herbs that can used include garlic, onion, paprika, ginger, chili powder, ginger, curcuma, coriander, oregano, sage, dill weed, basil, chive, fennel, mustard seed, lemon powder, nutmeg, cumin, rosemary, thyme, parsley, marjoram, paprika, black pepper, cayenne pepper, clove, cardamom, curry and combinations thereof.

The fat that is employed in the present process preferably comprises at least 50 wt.%, more preferably at least 80 wt.% of vegetable fat. Most preferably, the fat that is employed in the present process is vegetable fat. The term "vegetable fat" encompasses vegetable fats that have been fractionated, interesterified and/or hydrogenated. Examples of vegetable fats that may be suitable used in the savoury concentrate include palm oil, palm kernel oil, coconut oil, sunflower oil, soybean oil, rapeseed oil, linseed oil, cottonseed oil, maize oil, olive oil and combinations thereof.

The fat or the combination of fats that is used in the present process preferably has a solid fat content at 20°C (N₂₀) of at least 15%, more preferably a N₂₀ in the range of 20% to 90%, most preferably a N₂₀ in the range of 25% to 80%.

The solid fat content of fat at 20°C (N₂₀) or at other temperatures can suitably be determined using the method described in *Animal and vegetable fats and oils-Determination of solid fat content by pulsed NMR* -- *Part 1: Direct method* - ISO 8292-1:2008.

In a preferred embodiment of the invention, 100 parts by weight of the premix is mixed with 10 to 100 parts by weight of molten fat to produce the slurry. More preferably, 100 parts by weight of the premix is mixed with 15 to 85 parts by weight of molten fat, even more preferably mixed with 20 to 70 parts by weight of molten fat, most preferably mixed with 25 to 55 parts by weight of molten fat to a produce the slurry.

Typically, the slurry produced in step b) is shaped into a shaped article by pressing or extrusion. Preferably, the slurry is shaped into a shaped article by pressing, optionally by pressing an extruded slurry into a particular shape.

The particulate starch in the powder mix typically has a mass weighted average diameter in the range of 10 to 200 µm, more preferably in the range of 15 to 150 µm, most preferably in the range of 20 to 100 µm.

In one embodiment of the present process, the powder mix contains 7.5-80 wt.% of the particulate starch, by weight of the powder mix. More preferably the powder mix contains 10-60 wt.%, most preferably 12.5-40 wt.%, of the particulate starch, by weight of the powder mix. In a particularly preferred embodiment, the powder mix contains at least 5 wt.%, more preferably at least 7.5 wt.%, even more preferably at least 10 wt.% and most preferably at least 12.5 wt.% native starch.

The remainder of the powder mix preferably consists of edible particulate ingredients such as, for example, sodium chloride, potassium chloride, monosodium glutamate, sugars, spices, herbs and vegetables.

Preferably the powder mix contains at least 20 wt.%, more preferably at least 30 wt.%, more preferably at least 40 wt.% of one or more particulate components selected from sodium chloride, potassium chloride, monosodium glutamate, sugars, spices, herbs and vegetables.

Preferably, the powder mix contains at least 10 wt.%, more preferably at least 15 wt.%, most preferably at least 20 wt.% of chloride salt selected from sodium chloride, potassium chloride and combinations thereof. of salt. Sodium chloride is particularly preferred.

In an alternative embodiment of the present process, the powder mix consists of particulate starch, more preferably of particulate native starch, and the granules obtained by agglomeration of the particulate starch are combined with one or more other edible ingredients to produce the premix that is subsequently mixed with the molten fat. The one or more other edible ingredients are preferably particulate ingredients selected from sodium chloride, potassium chloride, monosodium glutamate, sugars, spices, herbs and vegetables.

The particulate starch that is employed in the powder mix is preferably obtained from a plant source selected from potato, maize, wheat, tapioca, rice, legumes and combinations thereof. More preferably, the particulate starch is obtained from a plant source selected from potato, wheat, maize, rice, legumes and combinations thereof. Most preferably, the particulate starch is obtained from a plant source selected from potato, wheat, maize, rice and combinations thereof.

According to a particularly preferred embodiment of the present process the powder mix is agglomerated by heating the powder mix to a temperature that is 5 to 15 °C below the gelatinization temperature of the particulate native starch, followed by wet agglomeration of the hot powder mix with an aqueous liquid. Although the inventors do not wish to be bound by theory it is believed that by heating the native starch to a temperature within the aforementioned temperature range, the ability of the starch to absorb water and to become 'sticky' is increased.

According to a preferred embodiment, the powder mix is heated to a temperature of at least 35°C, more preferably of at least 38 °C, even more preferably at least 40 °C, followed by the wet agglomeration of the hot powder mix.

Agglomeration of the powder is mix is preferably achieved without the application of pressure to compact or densify the powder mix.

During the present process the particulate starch is preferably not subjected to temperatures in excess of 80 °C for more than 60 seconds. More preferably, the particulate starch is not subjected to temperatures in excess of 77 °C for more than 60 seconds during the process.

In a preferred embodiment, the powder mix has a moisture content of 1-12 wt.% when the heating starts, preferably of 1.5-10 wt.%, more preferably 2-8 wt.%.

The wet agglomeration of the powder mix preferably comprises combining 100 parts by weight of the particulate native starch with 5-50 parts by weight of aqueous liquid, preferably 6-40 parts by weight of aqueous liquid, more preferably 7-35 parts by weight of aqueous liquid.

The aqueous liquid that is employed during wet agglomeration of the hot powder mix typically comprises 30-100 wt.% water. More preferably, the aqueous liquid contains at least 50 wt.% water. Most preferably, the aqueous liquid contains at least 80 wt.% water. Besides water, the aqueous liquid may contain a variety of edible ingredients such as binders, salt, sugars, monosodium glutamate, vitamins, minerals, flavouring, colouring.

During wet agglomeration the aqueous liquid may be distributed homogeneously across the hot powder mix by mixing or by spraying the aqueous liquid onto a fluidized powder mix.

In accordance with a particularly preferred embodiment of the present process, 100 parts by weight of the hot powder mix are combined with 0.5-10 parts by weight of aqueous liquid, preferably 1-8 parts by weight, more preferably 1.5-6 parts by weight of aqueous liquid before the mixing with the molten fat.

A second aspect of the present application relates to a shaped savoury concentrate that is obtained by the process as described herein.

In a preferred embodiment, the shaped savoury concentrate according to the invention has a porosity of 5 to 15 vol.%. More preferably, the shaped savoury concentrate of the invention has a porosity of 7-12 vol.%, most preferably a porosity of 8-10 vol.%.

According to another preferred embodiment, the shaped savoury concentrate comprises at least 4 wt.%, more preferably at least 6 wt.% and most preferably 8-30 wt.% starch-containing agglomerates having a diameter of 0.15-2.5 mm, more preferably of 0.3-1.8 mm.

The porosity of the shaped savoury concentrate and the diameter of the starch-containing agglomerates may suitably be determined by using X-ray microtomography (micro-CT). Suitable micro-CT images for quantitative analysis can be obtained by using a laboratory micro-CT system with a 100kV X-ray source with spot size < 5µm, power settings of 95kV and 104µA, an aluminium and copper beam filter (Al 1mm, and Cu 0.05mm), step size of 0.2° over 360 degrees frame averaging of 3 and scan with pixel size of 4 µm or lower.

In a particularly preferred embodiment of the invention, the shaped savoury concentrate contains:
- 4-25 wt.% of starch;
- 15-65 wt.% of salt selected from sodium chloride, potassium chloride, monosodium glutamate and combinations thereof;
- 0-40 wt.% of one or more particulate edible ingredients selected from sugars, spices, herbs and vegetables;
- 12-40 wt.% of fat, said fat having a solid fat content at 20°C (N₂₀) of at least 15%;
- 0.5-8 wt.% of water.

The shaped savoury concentrate preferably contains 5-23 wt.% of starch. More preferably the shaped savoury concentrate contains 6-21 wt.%, most preferably contains 8-19 wt.% of starch.

According to a particularly preferred embodiment, the shaped savoury concentrate contains at least 4 wt.%, more preferably at least 5 wt.%, even more preferably at least 6 wt.% and most preferably at least 8 wt.% of native starch.

The shaped savoury concentrate preferably contains 20-62 wt.% of salt selected from sodium chloride, potassium chloride, monosodium glutamate and combinations thereof. More preferably the shaped savoury concentrate contains 25-59 wt.%, most preferably contains 30-56 wt.% of salt selected from sodium chloride, potassium chloride, monosodium glutamate and combinations thereof.

The shaped savoury concentrate preferably contains 2.5-35 wt.% of the one or more particulate edible ingredients. More preferably the shaped savoury concentrate contains 5-30 wt.%, most preferably contains 7.5-25 wt.% of the one or more particulate edible ingredients.

The shaped savoury concentrate preferably contains 15-36 wt.% of fat. More preferably the shaped savoury concentrate contains 18-32 wt.%, most preferably contains 21-28 wt.% of fat.

The shaped savoury concentrate preferably contains 0.7-7 wt.% of water. More preferably the shaped savoury concentrate contains 0.9-6 wt.%, most preferably contains 1.1-5 wt.% of water.

The shaped savoury concentrate according to the invention may suitably comprise additional ingredients such as meat extracts, yeast extracts, flavours, thickeners, preservatives, colorants such as caramel, etc.

The shaped savoury concentrate typically has a weight between 4 and 20 g, more preferably between 4.5 and 18 g, most preferably between 5 and 15 g.

Preferably, the combination of starch-containing granules and salt constitutes at least 50 wt.%, more preferably at least 55 wt.% and most preferably 60-90 wt.% of the shaped savoury concentrate.

The water activity of the shaped savoury concentrate preferably does not exceed 0.8. More preferably, the water activity of the concentrate lies in the range of 0.2 to 0.6, most preferably in the range of 0.35 to 0.5.

Preferably, the hardness of the shaped savoury concentrate is lower than 50 N, more preferably lower than 40 N, even more preferably lower than 35 N. The hardness is preferably higher than 1 N, preferably higher than 2 N most preferably higher than 5 N.

The hardness of a shaped savoury concentrate may suitably be determined using the procedure described in the Examples.

According to a particularly preferred embodiment, the shaped savoury concentrate is a bouillon cube, more preferably a pressed or extruded bouillon cube, most preferably a pressed bouillon cube.

The invention is further illustrated by the following non-limiting examples.

### Examples

### Example 1

A shaped savoury concentrate was prepared on the basis of the recipe shown in Table 1.

**Table 1**

| | **Wt.%** |
|---|---|
| Sodium Chloride | 37.0 |
| Native potato starch ¹ | 11.7 |
| Mono sodium glutamate | 12.0 |
| Sugar | 2.0 |
| Dry spice mix² | 5.2 |
| Flavouring | 3.1 |
| Caramel powder | 1.2 |
| Fat ³ | 25.8 |
| Water | 2.0 |
| **Total** | 100 |

| | |
|---|---|
| *¹ Moisture content 9 wt.%; volume weighted mean diameter: 46 µm (determined by means of laser diffraction in a Malvern Mastersizer 2000, using the Scirocco venture dispenser) \* ² Parsley leaves, celery seed and ground curcuma ³ N₂₀ is appr. 75% | |

The dry ingredients (salt, glutamate, starch, dry mix) were pre-blended and introduced into a water tight plastic box and brought to a temperature of 45°C in an oven. Next, the dry mix was transferred into the bowl of a Kenwood Chef kitchen blender, equipped with a K-beater type of stirring geometry. The dry mix was mixed at low speed (setting 3), the water was gradually added and the recipe was mixed for another two minutes until the liquid was fully divided over the dry ingredients.

Next, the fat was added to the mix in molten form (80°C) and the resulting paste was mixed for another 15 minutes.

Subsequently, bouillon cubes were prepared from the paste by completely filing 24 x 28 mm compartments of a mould with the paste and shaping the paste by pressing it with rectangular pistons to a final tablet height of 11.5 +/- 0.3 mm. The bouillon cube so obtained had a porosity of 6.2 %. The mean volume weighted diameter of the starch-containing agglomerate within the bouillon cube was approximately 1.3 mm, and 95 vol.% of the starch-containing particles in the bouillon cube had a diameter in the range of 0.1-2.6 mm.

### Comparative example A

Example 1 was repeated, except that this time the dry premix was kept at ambient temperature (22°C) until addition of water and fat. The bouillon cubes so obtained contained substantially less than 5 wt.% of starch-containing granules having a diameter of 0.15 mm or more.

### Comparative example B

A shaped savoury concentrate was prepared on the basis of the recipe shown in Table 1 of Example 1.

Fat and 90 % of the starch were heated and mixed in a temperature controlled Kenwood mixer at 105°C until a milky suspension was obtained with a temperature of 95°C. In the next step the rest of the dry ingredients were added and mixed until a temperature of 72°C was reached. After 8 minutes of mixing, water was added and mixing was continued for another 4 minutes.

The resulting mix at a temperature of 56°C appeared as a heterogeneous mass with lakes of oil. This mix could not be cooled over a mini-votator line but instead was spread over a plate to cool until 38°C, resulting into a coarse and chunky mass. This mass was nevertheless portioned and pressed into cubes as described in Example 1.

### Example 2

The bouillon cubes of Example 1 and of Comparative Examples A and B were analysed and evaluated by an expert panel according to the procedures described below.

### Dissolution time

The dissolution speed of the bouillon cubes was measured by a dynamic conductivity measurement: A portion of 1 I demineralised water in a 2 liter beaker glass with a diameter of 12.7 cm is brought to a temperature of 92 +/- 1°C and one cube is dissolved under continuous stirring using a triangular stirring bar with a length of 8 cm at a constant stirring speed of 170 rpm. The conductivity of the water is monitored using a Mettler Toledo Seven Compact conductivity meter. The conductivity rises due to dissolution of the salts from the formulation into the water, until all salt is dissolved and a maximum is reached. The dissolution time is defined as the time at which the conductivity has reached 90% of the final plateau conductivity value. Measurements are carried out in threefold.

### Hardness measurement

The hardness of the bouillon cubes was measured using a TA.XT.plus Texture Analyser, from Stable Micro Systems, using the following procedure:
- The texture analyser is equipped with a cylindrical probe having a diameter of ½ inch.
- A bouillon cube (dimensions 11.5 * 24 * 28 mm) is positioned horizontally under the probe, with the centre of the cube in the horizontal plane coinciding with the centre of the probe.
- The cube is compressed by lowering the probe at a constant speed of 0.5 mm/s over a distance of 3 mm after touching the top surface.
- During compression, the force experience by the probe is measured. The hardness is defined as the maximum force that is encountered divided by the surface of the probe in touch with the cube.

### Contrast Ratio

The contrast Ratio of the bouillon cubes was determined from digital images using Colour Contrast Analyzer version 2.4 (The Paciello Group): For each cube, four areas are randomly selected and colour contrast is determined for each of these areas and subsequently averaged.

The results are summarized in Table 2.

**Table 2**

| Example | Texture | Colour contrast | Sandiness | Hardness [N] | Dissolution time [s] |
|---|---|---|---|---|---|
| 1 | Good, pasty | 3.4 | 5.75 | 25 | 21 |
| A | Good, pasty | 2.3 | 4.2 | 27 | 22 |
| B | Coarse and chunky | 3.1 | N.D. | 137 | N.D. |

The high colour contrast of the tablets of Example 1 was caused by the presence of dark specs. These dark specs are believed to be caused by starch agglomerates that have absorbed colour components of the caramel ingredient.

The high sandiness score of the tablets of Example 1 indicates that these tablets can easily be crumbled by hand.

### Comparative Example C

A shaped savoury concentrate was prepared on the basis of the recipe that is shown in Table 3, using the process as described in Example 1.

**Table 3**

| | **Wt.%** |
|---|---|
| Wheat flour 14% | 38.64 |
| Palm Oil | 38.69 |
| Corn starch ¹ | 4.52 |
| Dry spice mix | 18.0 |
| Salt | 0.15 |
| | 100.00 |

| | |
|---|---|
| *¹ Volume weighted mean diameter: 15 µm (determined by means of laser diffraction in a Malvern Mastersizer 2000, using the Scirocco venture dispenser)* | |

The resulting mass after mixing was thin and liquid-like. Even after one week at ambient temperature (22°C), the paste was too soft to be pressed into cubes.

### Comparative Example D

A shaped savoury concentrate was prepared on the basis of the recipe that is shown in Table 4, using the process as described in Example 1.

**Table 4**

| | **Wt.%** |
|---|---|
| Native potato starch ¹ | 29.57 |
| Skimmed milk powder | 27.92 |
| Sugar | 26.28 |
| Dry spice mix | 0.46 |
| Water | 12.81 |
| Gelatin | 2.96 |
| | 100,00 |

| | |
|---|---|
| ¹ same as in Example 1 | |

During the mixing process, after combining all ingredients, the mass turned very sticky and after 10 minutes of mixing the engine of the mixer overheated. Nevertheless an attempt was made to press cubes from this mass, but it was very hard to remove cubes from the mold.

### Comparative Example E

A shaped savoury concentrate was prepared on the basis of the recipe that is shown in Table 5, using the process as described in Example 1.

**Table 5**

| | **Wt.%** |
|---|---|
| Native potato starch ¹ | 39.20 |
| Skimmed milk powder | 18.09 |
| Onion powder | 2.01 |
| MSG | 1.51 |
| Garlic powder | 9.05 |
| Gelatin | 4.02 |
| Water | 26.13 |
| | 100.00 |

| | |
|---|---|
| ¹ same as in Example 1 | |

During the mixing process, after combining all ingredients, the mass turned firm, but was non-sticky and after 17 minutes of mixing the engine of the mixer overheated and a hard, non-sticky mass was obtained. Cubes could be made from this mass, but their mechanical behavior was elastic/deformable and not suitable for a stock cube.

### Comparative Example F

A shaped savoury concentrate was prepared on the basis of the recipe that is shown in Table 6, using the process as described in Example 1.

**Table 6**

| | **Wt.%** |
|---|---|
| Native potato Starch ¹ | 46.2 |
| Dry spice mix | 14.4 |
| Salt | 9.6 |
| Gelatin | 4.8 |
| Water | 10 |
| Fat ¹ | 15 |
| | 100.00 |

| | |
|---|---|
| ¹ same as in Example 1 | |

After 19 minutes of mixing the engine of the mixer overheated. A smooth pale-brown paste was obtained. Cubes could be pressed from this paste but could not easily be crumbled by hand.

## Claims

1. A process of preparing a savoury concentrate in the form of a shaped article, said process comprising the following sequence of processing steps:
a) preparing a premix having a moisture content of 0.5-12 wt.% by:
- providing a powder mix of one or more particulate ingredients, including 5-100% by weight of the powder mix of particulate native starch;
- agglomerating the powder mix to produce starch-containing granules by heating the powder mix to a temperature that is 3 to 20 °C below the gelatinization temperature of the particulate native starch, followed by wet agglomeration of the hot powder mix with an aqueous liquid; and
- optionally combining the granules with one or more other edible ingredients;
said premix containing, calculated by weight of dry matter:
• 5-30 wt.% of starch-containing granules having a diameter of 0.15-2.5 mm and comprising 20-100 wt.% starch;
• 10-76 wt.% of salt selected from sodium chloride, potassium chloride, monosodium glutamate and combinations thereof;
• 0-60 wt.% of one or more particulate edible ingredients selected from sugars, spices, herbs and vegetables;
b) mixing the premix with molten fat to produce slurry; and
c) shaping the slurry into a shaped article.

2. Process according to claim 1, wherein 100 parts by weight of the premix is mixed with 10 to 100 parts by weight of molten fat.

3. Process according to claim 1 or 2, wherein the molten fat employed in step b) has a solid fat content at 20°C (N₂₀) of at least 15%.

4. Process according to any one of the preceding claims, wherein the slurry is shaped by pressing or extrusion.

5. Process according to any one of the preceding claims, wherein the powder mix contains particulate native starch and is agglomerated by heating the powder mix to a temperature that is 3 to 20 °C below the gelatinization temperature of the particulate native starch, followed by wet agglomeration of the heated powder mix with an aqueous liquid.

6. Process according to any one of the preceding claims, wherein the powder mix is agglomerated by heating the powder mix to a temperature that is 5 to 15 °C below the gelatinization temperature of the particulate native starch, followed by wet agglomeration of the hot powder mix with an aqueous liquid.

7. Process according to claim 6, wherein the powder mix is heated to a temperature of at least 35°C, followed by wet agglomeration of the hot powder mix.

8. Process according to claim 6 or 7, wherein the wet agglomeration comprises combining 100 parts by weight of the particulate native starch with 5-50 parts by weight of the aqueous liquid.

9. Process according to any one of claims 6-8, wherein the powder mix has a moisture content of 1-12 wt.% when the wet agglomeration starts.

10. Process according to any one of the preceding claims, wherein the powder mix contains at least 50 wt.% of one or more particulate components selected from sodium chloride, potassium chloride, monosodium glutamate, sugars, spices, herbs and vegetables.

11. Process according to any one of the preceding claims, wherein the powder mix contains at least 20 wt.% of salt selected from sodium chloride, potassium chloride and combinations thereof.

12. Process according to any one of the preceding claims, wherein 100 parts by weight of the hot powder mix are combined with 0.5-10 parts by weight of aqueous liquid before the mixing with the molten fat.

13. A shaped savoury concentrate obtained by a process according to any one of the preceding claims, wherein said shaped savoury concentrate comprises at least 4 wt.% starch-containing agglomerates having a diameter of 0.15-2.5 mm.

14. Shaped savoury concentrate according to claim 13, said concentrate having a porosity of 5 to 15 vol.%.

15. Shaped savoury concentrate according to claim 13 or 14, wherein the shaped article has a weight of 4 to 20 grams.

## Patentansprüche

1. Verfahren zur Herstellung eines schmackhaften Konzentrats in Form eines Formartikels, wobei das Verfahren die folgende Abfolge von Verarbeitungsschritten umfasst:
a) Herstellen einer Vormischung mit einem Feuchtigkeitsgehalt von 0,5-12 Gew.-% durch:
- Bereitstellen einer Pulvermischung aus einem oder mehreren teilchenförmigen Bestandteilen, einschließlich 5-100 Gew.-% der Pulvermischung von teilchenförmiger nativer Stärke;
- Agglomerieren der Pulvermischung, um Stärke enthaltendes Granulat herzustellen, durch Erwärmen der Pulvermischung auf eine Temperatur, die 3 bis 20 °C unter der Verkleisterungstemperatur der teilchenförmigen nativen Stärke liegt, gefolgt von Nassagglomeration der heißen Pulvermischung mit einer wässrigen Flüssigkeit; und
- gegebenenfalls Kombinieren des Granulats mit einem oder mehreren anderen essbaren Bestandteilen;
wobei die Vormischung enthält, berechnet auf das Gewicht der Trockenmasse:
• 5-30 Gew.-% Stärke enthaltendes Granulat mit einem Durchmesser von 0,15-2,5 mm und umfassend 20-100 Gew.-% Stärke;
• 10-76 Gew.-% Salz, ausgewählt aus Natriumchlorid, Kaliumchlorid, Mononatriumglutamat und Kombinationen davon;
• 0-60 Gew.-% eines oder mehrerer teilchenförmiger essbarer Bestandteile, ausgewählt aus Zuckern, Gewürzen, Kräutern und Gemüse;
b) Mischen der Vormischung mit geschmolzenem Fett, um eine Aufschlämmung zu erzeugen; und
c) Formen der Aufschlämmung zu einem Formartikel.

2. Verfahren nach Anspruch 1, wobei 100 Gewichtsteile der Vormischung mit 10 bis 100 Gewichtsteilen geschmolzenem Fett gemischt werden.

3. Verfahren nach Anspruch 1 oder 2, wobei das in Schritt b) verwendete geschmolzene Fett einen Festfettgehalt bei 20 °C (N₂₀) von mindestens 15% aufweist.

4. Verfahren nach irgendeinem der vorhergehenden Ansprüche, wobei die Aufschlämmung durch Pressen oder Extrudieren geformt wird.

5. Verfahren nach irgendeinem der vorhergehenden Ansprüche, wobei die Pulvermischung teilchenförmige native Stärke enthält und agglomeriert wird durch Erwärmen der Pulvermischung auf eine Temperatur, die 3 bis 20 °C unter der Verkleisterungstemperatur der teilchenförmigen nativen Stärke liegt, gefolgt von Nassagglomeration der erwärmten Pulvermischung mit einer wässrigen Flüssigkeit.

6. Verfahren nach irgendeinem der vorhergehenden Ansprüche, wobei die Pulvermischung agglomeriert wird durch Erwärmen der Pulvermischung auf eine Temperatur, die 5 bis 15 °C unter der Verkleisterungstemperatur der teilchenförmigen nativen Stärke liegt, gefolgt von Nassagglomeration der heißen Pulvermischung mit einer wässrigen Flüssigkeit.

7. Verfahren nach Anspruch 6, wobei die Pulvermischung auf eine Temperatur von mindestens 35 °C erwärmt wird, gefolgt von Nassagglomeration der heißen Pulvermischung.

8. Verfahren nach Anspruch 6 oder 7, wobei die Nassagglomeration das Kombinieren von 100 Gewichtsteilen der teilchenförmigen nativen Stärke mit 5-50 Gewichtsteilen der wässrigen Flüssigkeit umfasst.

9. Verfahren nach irgendeinem der Ansprüche 6-8, wobei die Pulvermischung einen Feuchtigkeitsgehalt von 1-12 Gew.-% aufweist, wenn die Nassagglomeration beginnt.

10. Verfahren nach irgendeinem der vorhergehenden Ansprüche, wobei die Pulvermischung mindestens 50 Gew.-% einer oder mehrerer teilchenförmiger Komponenten enthält, ausgewählt aus Natriumchlorid, Kaliumchlorid, Mononatriumglutamat, Zuckern, Gewürzen, Kräutern und Gemüse.

11. Verfahren nach irgendeinem der vorhergehenden Ansprüche, wobei die Pulvermischung mindestens 20 Gew.-% Salz enthält, das ausgewählt ist aus Natriumchlorid, Kaliumchlorid und Kombinationen davon.

12. Verfahren nach irgendeinem der vorhergehenden Ansprüche, wobei 100 Gewichtsteile der heißen Pulvermischung vor dem Mischen mit dem geschmolzenen Fett mit 0,5-10 Gewichtsteilen wässriger Flüssigkeit kombiniert werden.

13. Geformtes schmackhaftes Konzentrat, erhalten durch ein Verfahren nach irgendeinem der vorhergehenden Ansprüche, wobei das geformte schmackhafte Konzentrat mindestens 4 Gew.-% Stärke enthaltende Agglomerate mit einem Durchmesser von 0,15-2,5 mm aufweist.

14. Geformtes schmackhaftes Konzentrat nach Anspruch 13, wobei das Konzentrat eine Porosität von 5 bis 15 Vol.-% aufweist.

15. Geformtes herzhaftes Konzentrat nach Anspruch 13 oder 14, wobei der Formartikel ein Gewicht von 4 bis 20 g aufweist.

## Revendications

1. Procédé de préparation d'un concentré savoureux dans la forme d'un article façonné, ledit procédé comprenant la séquence suivante d'étapes de traitement :
a) préparation d'un prémélange ayant une teneur en humidité de 0,5-12 % en masse par :
- fourniture d'un mélange de poudre d'un ou plusieurs ingrédients particulaires, incluant 5-100 % en masse du mélange de poudre d'amidon natif particulaire ;
- agglomération du mélange de poudre pour produire des granulés contenant de l'amidon par chauffage du mélange de poudre à une température qui est de 3 à 20°C inférieure à la température de la gélatinisation de l'amidon natif particulaire, puis agglomération humide du mélange de poudre chaud avec un liquide aqueux ; et
- éventuellement combinaison des granulés avec un ou plusieurs autres ingrédients comestibles ;
ledit prémélange contenant, calculé en masse de matière sèche :
. 5-30 % en masse de granulés contenant de l'amidon ayant un diamètre de 0,15-2,5 mm et comprenant 20-100 % en masse d'amidon ;
. 10-76 % en masse de sel choisi parmi le chlorure de sodium, chlorure de potassium, glutamate de monosodium et combinaisons de ceux-ci ;
. 0-60 % en masse d'un ou plusieurs ingrédients comestibles particulaires choisis parmi des sucres, épices, herbes et légumes ;
b) mélange du prémélange avec de la graisse fondue pour produire une suspension ; et
c) façonnage de la suspension en un article façonné.

2. Procédé selon la revendication 1, dans lequel 100 parties en masse du prémélange sont mélangées avec de 10 à 100 parties en masse de graisse fondue.

3. Procédé selon la revendication 1 ou 2, dans lequel la graisse fondue utilisée dans l'étape b) présente une teneur en graisse solide à 20°C (N₂₀) d'au moins 15 %.

4. Procédé selon l'une quelconque des revendications précédentes, dans lequel la suspension est façonnée par pressage ou extrusion.

5. Procédé selon l'une quelconque des revendications précédentes, dans lequel le mélange de poudre contient de l'amidon natif particulaire et est aggloméré par chauffage du mélange de poudre à une température qui est de 3 à 20°C inférieure à la température de gélatinisation de l'amidon natif particulaire, puis par agglomération humide du mélange de poudre chauffé avec un liquide aqueux.

6. Procédé selon l'une quelconque des revendications précédentes, dans lequel le mélange de poudre est aggloméré par chauffage du mélange de poudre à une température qui est de 5 à 15°C inférieure à la température de gélatinisation de l'amidon natif particulaire, puis par agglomération humide du mélange de poudre chaud avec un liquide aqueux.

7. Procédé selon la revendication 6, dans lequel le mélange de poudre est chauffé à une température d'au moins 35°C, suivi par une agglomération humide du mélange de poudre chaud.

8. Procédé selon la revendication 6 ou 7, dans lequel l'agglomération humide comprend la combinaison de 100 parties en masse de l'amidon natif particulaire avec 5-50 parties en masse du liquide anhydre.

9. Procédé selon l'une quelconque des revendications 6-8, dans lequel le mélange de poudre présente une teneur en humidité de 1-12 % en masse lorsque l'agglomération humide débute.

10. Procédé selon l'une quelconque des revendications précédentes, dans lequel le mélange de poudre contient au moins 50 % en masse d'un ou plusieurs constituants particulaires choisis parmi le chlorure de sodium, chlorure de potassium, glutamate de monosodium, des sucres, épices, herbes et légumes.

11. Procédé selon l'une quelconque des revendications précédentes, dans lequel le mélange de poudre contient au moins 20 % en masse de sel choisi parmi le chlorure de sodium, chlorure de potassium et combinaisons de ceux-ci.

12. Procédé selon l'une quelconque des revendications précédentes, dans lequel 100 % en masse du mélange de poudre chaud sont combinés avec 0,5-10 parties en masse de liquide aqueux avant le mélange avec la graisse fondue.

13. Concentré savoureux façonné obtenu par un procédé selon l'une quelconque des revendications précédentes, dans lequel ledit concentré savoureux façonné comprend au moins 4 % en masse d'agglomérats contenant de l'amidon ayant un diamètre de 0,15-2,5 mm.

14. Concentré savoureux façonné selon la revendication 13, ledit concentré ayant une porosité de 5 à 15 % en volume.

15. Concentré savoureux façonné selon la revendication 13 ou 14, dans lequel l'article façonné présente une masse de 4 à 20 grammes.
